# EUROPÄISCHE PATENTANMELDUNG

(11) **EP 1 167 885 A2**
(43) Veröffentlichungstag der Anmeldung: **02.01.2002**
(21) Anmeldenummer: 01114821.0
(22) Anmeldetag: 27.06.2001
(51) Int. Cl.: F24D 3/16

(54) **Strahelement zum Abstrahlen von Wärme und/oder Kälte**

(30) Priorität: 30.06.2000 DE 10031980
(71) Anmelder: Vollmer, H., Dr.Ing., 77704 Oberkirch-Nussbach (DE)
(72) Erfinder: Vollmer, H., Dr.Ing., 77704 Oberkirch-Nussbach (DE)
(74) Vertreter: Maucher, Wolfgang, Dipl.-Ing.

(57) **Zusammenfassung**

Ein Strahlelement (1) zum Abstrahlen von Wärme oder Kälte hat einen ein Heiz- oder Kühlmedium führenden Kanal (2), der einstückig oder als Rohr mit einem Abstrahlkörper (3) wärmeleitend verbunden ist. Die Querschnittsform des Strahlelementes (1) ist dabei durch unterschiedliche, miteinander verbundene Stege etwa stufen- oder treppenförmig ausgebildet, so daß sich in der Längsmitte des Strahlelementes (1) eine tiefste Stelle ergibt. Zumindest an dieser tiefsten Stelle, gegebenenfalls aber auch an einer dieser benachbarten etwas weniger tiefen Stelle kann wenigstens ein das Medium führender Kanal (2) vorgesehen sein, wobei aber gegebenenfalls auch mehrere Kanäle (2) möglich sind. Durch die vorzugsweise wellenförmig gestaltete treppenförmige Querschnittsform ergibt sich auf relativ engem Raum eine große und effektive Abstrahlfläche mit wenig oder keiner diese Abstrahlung störenden Konvektion.

## Beschreibung

Die Erfindung betrifft ein Strahlelement zum Abstrahlen von Wärme und/oder Kälte mit wenigstens einem Heiz- oder Kühlmedium führenden Kanal, welcher mit einem Abstrahlkörper wärmeleitend verbunden ist, der insbesondere an einer Gebäudedecke anbringbar ist.

Derartige Strahlelemente sind in unterschiedlicher und vielfältiger Form bekannt.

Beispielsweise kennt man aus EP 0 360 097 A1 eine Deckenstrahlplatte, die an einem profilierten, als Platte ausgebildeten Stahlblech parallel zueinander im Abstand angeordnete, in Längsrichtung verlaufende Mulden hat, in welchen als das Medium führende Kanäle Stahlrohre eingeschweißt sind. Dabei sind diese Mulden unter Bildung von Schattenfugen in das Stahlblech nach innen gedrückt. Somit sind auf der Abstrahlseite Schattenfugen vorgesehen, die die Abstrahlleistung verschlechtern. Außerdem ergibt eine im wesentlichen ebene Platte eine insgesamt begrenzte Abstrahlfläche, so daß für eine ausreichende Strahlleistung mehrere Kanäle oder Rohre relativ zueinander angeordnet und verschweißt werden müssen, was einen erheblichen Aufwand bedeutet.

Aus der EP 0 501 443 A1 ist eine Deckenstrahlplatte bekannt, bei welcher an der Strahlfläche nach unten überstehende Ausformungen zum Einlegen entsprechender, ein Medium führender Kanäle oder Rohre vorgesehen sind, so daß eine Verschweißung zwar eventuell entfallen kann und eine etwas größere Abstrahlfläche entsteht, diese aber immer noch durch die flachen und horizontalen Nachbarbereiche begrenzt wird.

Es besteht deshalb die Aufgabe, ein Strahlelement der eingangs genannten Art zu schaffen, bei welchem die Abstrahlleistung verbessert ist.

Zur Lösung dieser Aufgabe ist das eingangs definierte Strahlelement dadurch gekennzeichnet, daß es ein Querschnittsprofil einerseits mit mehreren im wesentlichen parallelen und andererseits mit diese verbindenden, im Winkel zueinander angeordneten Stegen aufweist, die im Querschnitt gesehen - bei horizontal aufgehängtem Strahlungselement - von außen zu seiner Mitte von oben nach unten stufen- oder treppenförmig angeordnet sind, so daß sich in der Mitte eine tiefste Stelle ergibt, und daß zumindest an dieser tiefsten Stelle und/oder an einer dieser benachbarten Stelle der wenigstens eine das Medium führende Kanal vorgesehen ist.

Durch die Treppenform des Querschnittes des Strahlelementes mit einer tiefsten Stelle ergibt sich bei gleichbleibender Breite des Strahlelementes eine vergrößerte Abstrahlfläche oder umgekehrt kann mit einem schmaleren Strahlelement dennoch eine Abstrahlfläche erzielt werden, die sonst bei ebenen Strahlplatten nur mit einer größeren Breite erreicht werden kann. Gleichzeitig ergibt sich aufgrund der stufen- oder treppenförmigen Querschnittsform an allen Stellen dieses Strahlelementes jeweils ein günstiger Abstrahlwinkel, wobei ein Abstrahlen gegen das Strahlelement selbst vermieden wird, so daß die Abstrahlung entsprechend effektiv ist. Durch die Anordnung des Medium führenden Kanals an der tiefsten Stelle oder einer dieser benachbarten, also ebenfalls relativ tief liegenden Stelle, wird gleichzeitig die entsprechende Erwärmung oder Abkühlung durch das in dem Kanal befindliche Medium über den gesamten Profilquerschnitt begünstigt.

Die abwechselnd mit ihrem Querschnitt nach unten und zur Mitte hin verlaufenden Stege können über gerundete Bereiche verbunden sein. Je nach Krümmungsradius ergibt dies mehr oder weniger kantige Übergänge zwischen den einzelnen Stegen.

Dabei kann eine zweckmäßige Ausführungsform vorsehen, daß die stufen- oder treppenförmige Querschnittsform etwa wellenförmig ausgebildet ist. Dies verbessert gegenüber kantigen Übergängen zwischen Stegen unterschiedlicher Querschnittsrichtung die gleichmäßige Abstrahlung von Wärme oder Kälte und verleiht dem Strahlelement gleichzeitig ein gefälliges Aussehen.

Die zur Mitte hin verlaufenden Stege können bei horizontal aufgehängtem Strahlungselement etwa horizontal und die mit ihrem Querschnitt nach unten verlaufenden Stege schräg angeordnet sein. Zwar könnten sie auch rechtwinklig zu den horizontalen Stegen verlaufen, jedoch ergibt die etwas schräge Anordnung einen günstigeren Abstrahlwinkel schräg nach unten. Dabei sei erwähnt, daß dieses Strahlungselement gegebenenfalls auch an einer Wand, also mit seinem Querschnitt im wesentlichen vertikal angeordnet werden könnte, so daß dann die "horizontalen" Stege mit ihrem Querschnitt vertikal verlaufen würden. Da das Strahlelement überwiegend strahlen soll - im Gegensatz zur Wärmeabgabe durch Konvektion - ist die Aufhängung horizontal (unter einer Decke) günstiger oder zu bevorzugen.

Die tiefste Stelle kann durch einen im Querschnitt bogenförmig verlaufenden, insbesondere im Querschnitt etwa teilkreis- oder halbkreisförmigen Steg gebildet sein, von welchem außenseitig jeweils im wesentlichen horizontal angeordnete Stege abgehen können. Es ist aber auch denkbar, daß sich an diesen im Querschnitt bogenförmigen, die tiefste Stelle bildenden Steg, der also praktisch eine Rinne darstellt, zunächst vertikale oder schräg verlaufende Stege anschließen, die dann in etwa horizontale oder schräg nach oben führende Stege übergehen.

Diese Querschnittsform an der tiefsten Stelle hat den großen Vorteil, daß der bogenförmig oder halbkreisförmig geformte, an der tiefsten Stelle liegende rinnenartige Steg Teil des Umfanges des das Medium führenden Kanales sein kann oder ein als das Medium führender Kanal ausgebildetes Rohr aufnehmen kann, das mit seiner Außenseite an der Innenseite dieses Steges oder dieser Rinne insbesondere flächig anliegen kann. Der gerundete Übergang an der tiefsten Stelle, der gewissermaßen den Übergang von der die eine Hälfte des Strahlelementes bildenden Treppe zu der anderen ist, kann also gleichzeitig besonders gut ausgenutzt werden, um das Medium an einer tiefsten Stelle zu führen, was für die Abstrahlung von Wärme oder Kälte entsprechend günstig ist und auch zu einer bestmöglichen Erwärmung oder Abkühlung des gesamten Querschnittes des Strahlelementes führt.

Die randseitig jeweils letzte Richtungsänderung kann in einen bei horizontaler Anordnung des Strahlelementes im Querschnitt etwa vertikalen Befestigungsrand übergehen, der zum Befestigen des Strahlelementes an einem mit ihm benachbarten weiteren Strahlelement und/oder an einer Deckenplatte, Gebäudedecke oder dergleichen dienen kann, so daß unterschiedlich breite Strahlflächen erzeugt oder montiert werden können. Somit ist auch die Montage des Strahlelementes einfach und je nach Länge des Querschnittes dieses vertikalen Befestigungsrandes kann das gesamte Strahlelement gegenüber einer Grundfläche entsprechend weit vorstehen und somit gemäß seiner Querschnittsform eine große Zone eines Raumes mit Wärme oder Kälte bestrahlen.

Die Befestigungsränder des Strahlelementes können nach innen gerichtete Halterungen, Vorsprünge oder Leisten zum Fixieren einer im Inneren des Querschnittes des Strahlelementes oberhalb des oder der das Medium führenden Kanäle angeordneten Isolierung vorgesehen sein und eine dort angeordnete Isolierung kann den oder die das Medium führenden Kanäle überdecken. Dies ist besonders günstig, wenn der oder die Kanäle ein warmes oder heißes Medium führen, das anderenfalls eventuell einen Teil seiner Wärme an eine Gebäudedecke oder dergleichen Grundfläche abgeben würde.

Eine Ausgestaltung des Strahlelementes und insbesondere seiner Befestigungsränder kann darin bestehen, daß ein am obersten Rand des Befestigungsrandes nach innen beziehungsweise zur Mitte des Strahlelementes gerichteter Befestigungssteg zum Übergreifen der Isolierung und/oder zum Verankern von Klammern oder dergleichen Befestigungselemente zum lösbaren Befestigen des Strahlelementes und/oder der Isolierung vorgesehen sind. Somit wird die Montage vor allem eines zweckmäßigerweise streifenförmigen Isolierelementes erleichtert.

Ein als Medium führender Kanal ausgebildetes Rohr kann an der Innenseite einer der Wellen oder dergleichen Profilierungen des Strahlelementes insbesondere an der tiefsten Welle oder Stelle durch Kleben, Pressen, Löten und/oder Schweißen befestigt sein, um den Wärmeübergang zu optimieren.

An der Innenseite des Strahlelementes kann benachbart zu der Auflagestelle für das Rohr oder dergleichen wenigstens ein Steg, vorzugsweise beidseits dieser Stelle jeweils ein Steg vorstehend angeordnet sein, der nach dem Einlegen des Rohres dieses an seinem Umfang zumindest bereichsweise umgreifend verbiegbar ist, so daß zwei beidseits des Rohres angeordnete Stege aufeinander zuverformbar sind und das Rohr wärmeleitend und formschlüssig festlegen. Gleichzeitig wird durch solche im Innenquerschnitt des Strahlelementes angeordnete Stege, die in Kontakt mit dem das Medium führenden Rohr gebracht werden, die Wärmeleitung an die äußere Oberfläche des Strahlelementes verbessert und somit die Abstrahlleistung erhöht.

Das Strahlelement kann aus Aluminium oder einer Alumuniumlegierung bestehen und das das Medium führende Rohr kann aus Kunststoff oder aus einem mit Aluminium verträglichen Metall, insbesondere ebenfalls aus Aluminium oder aus einer Aluminiumlegierung oder Edelstahl bestehen. Aluminium ist einerseits relativ preiswert und andererseits leitet es die Wärme gut, so daß eine hohe Abstrahlleistung ermöglicht wird. Gleichzeitig kann es als Strangpreßprofil ausgebildet werden, was die Herstellung erleichtert, selbst wenn einerseits die treppen- oder wellenform und andererseits an der Innenseite vorstehende Stege zu berücksichtigen sind.

Der Kanal kann aber auch direkt im Strahlelement bzw. in dem dieses bildenden Strangpreßprofil integriert sein, das heißt auf eine Rohreinlage kann insbesondere bei der Wahl eines wasserbeständigen Metalls oder einer wasserbeständigen Aluminiumlegierung verzichtet werden.

Eine Ausgestaltung des Strahlelementes von besonderer und vorteilhafter Bedeutung kann darin bestehen, daß nahe dem oder den Längsrändern des Strahlelementes, insbesondere nahe der außenseitig letzten Richtungsänderung des Querschnittes und nahe dem Übergang in einen im Querschnitt etwa vertikalen Befestigungsrand, ein über die Länge des Strahlelementes verlaufender außenseitiger Vorsprung, insbesondere mit einer konvex gekrümmten Querschnittsform, angeordnet ist. Besonders effektiv ist diese Maßnahme, wenn an beiden Längsrändern des Strahlelementes jeweils ein derartiger, in Längsrichtung verlaufender Vorsprung vorgesehen ist. Dieser kann bewirken, daß die sonst in diesem Bereich zu erwartende Konvektion der Luft zumindest vermindert wird, weil ein solcher Luftstrom oder eine solche Konvektion von diesem Vorsprung be- oder verhindert wird, so daß der angestrebte Effekt einer möglichst guten Strahlleistung unterstützt wird.

Weitere Ausgestaltungen des Strahlelementes sind Gegenstand der Ansprüche 14 und 15 und betreffen an seiner Innenseite angeordnete Stege, die die Unterstützung einer eingelegten Isolierung verbessern können.

Insgesamt ergibt sich ein Strahlelement, dessen Querschnitt für eine gleichmäßige Abstrahlung von Wärme oder gegebenenfalls Kälte optimiert ist, wobei eine hohe Strahlleistung selbst bei einem relativ schmalen Strahlelement möglich ist, da die Oberfläche durch eine bis zu einer tiefsten Stelle führende, vorzugsweise symmetrische Treppenform vergrößert ist, wobei gleichzeitig durch gerundete Übergänge an den "Stufen" dieser "Treppe" Schattenmulden vermieden und günstige Abstrahlwinkel geschaffen werden. Der das Medium führende Kanal kann dabei entweder unmittelbar einstückig in das Profil des Strahlelementes eingearbeitet oder durch ein eingelegten und/oder befestigtes Rohr beispielsweise aus Kupfer, Edelstahl oder auch aus Aluminium gebildet sein, so daß eine effektive Übertragung der Wärme oder Kälte von dem Medium auf die Oberfläche des Strahlelementes erreicht wird. Bei horizontaler Anordnung, bei welcher die "Treppen" von einer tiefsten Stelle des Strahlelementes beidseits nach oben ansteigen, kann die Abstrahlung von Wärme oder Kälte unter günstigen Winkeln und relativ gleichmäßig nach unten und schräg nach unten erfolgen.

Es sei noch erwähnt, daß anstelle eines Strangpreßprofiles auch ein Strahlelement bzw. ein Abstrahlkörper aus Blech mit gegebenenfalls relativ eng angelegten Kantungen möglich ist, das heißt der Abstrahlkörper kann auch ein Profil aus Metallblech oder sonstigem wärmeleitendem Material sein. Dabei ist es zum Beispiel günstig, wenn das Abstrahlelement aus Blech geformt, zum Beispiel rollgeformt und/oder gekantet ist.

Wie bereits erwähnt können die den treppenförmigen Querschnitt bildenden Stege über gerundete Bereiche verbunden sein. Dabei können die Übergänge zwischen den Stegen einen kleinen Krümmungsradius haben und/oder kantig ausgebildet sein, so daß zwischen einzelnen Stegen oder auch gegebenenfalls am Übergang zwischen allen Stegen die Rundung praktisch wegfällt. Dadurch lassen sich bei nahezu gleichbleibend guter Abstrahlung in unterschiedliche Richtungen besondere ästhetische Wirkungen und Anpassungen an die Umgebung erzielen.

Nachstehend sind Ausführungsbeispiele der Erfindung anhand der Zeichnung näher beschrieben.

### Es zeigt:

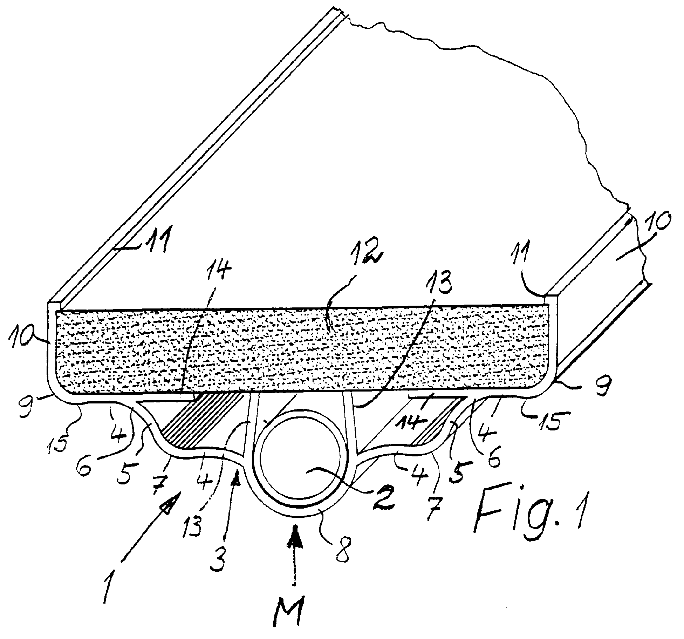

- Fig.1: teils im Querschnitt teils in schaubildlicher Darstellung ein abgebrochen dargestelltes Strahlelement in horizontaler Anordnung, dessen Querschnitt von beidseitigen vertikalen Befestigungsrändern über teils horizontale, teils schräge, treppenförmig angeordnete Stege zu einer etwa rinnenförmigen tiefsten Stelle führt, in welcher ein das Medium führendes Rohr angeordnet ist,

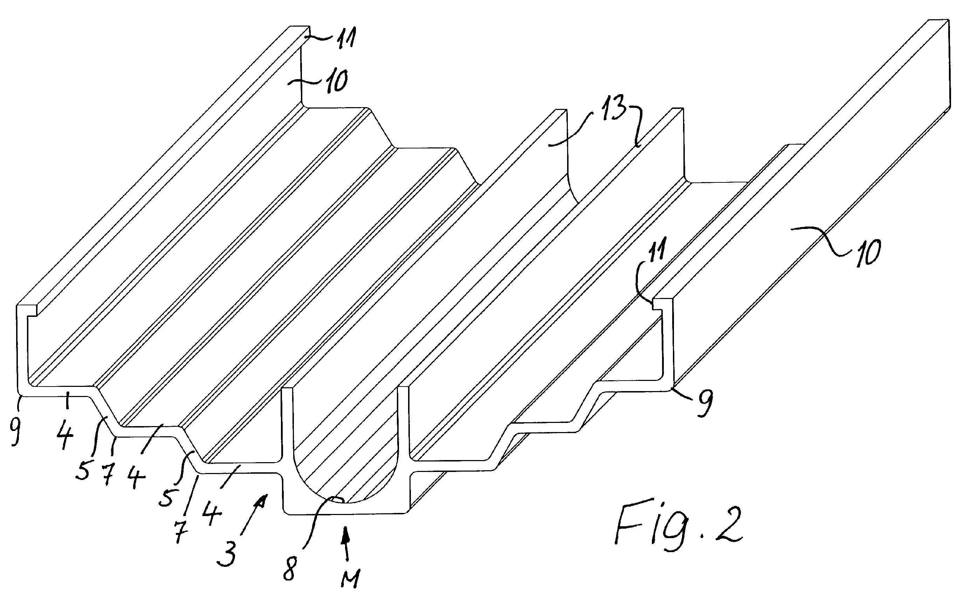

- Fig.2: eine abgewandelte Ausführungsform des zu dem Strahlelement gehörenden Abstrahlkörpers, bei welchem die Übergänge zwischen den einzelnen Stegen mit kleinem Radius gekrümmt oder nahezu kantig ausgebildet sind und die bei horizontaler Anordnung dieses Abstrahlkörpers nach unten verlaufenden Stege im Querschnitt schräg angeordnet sind, sowie

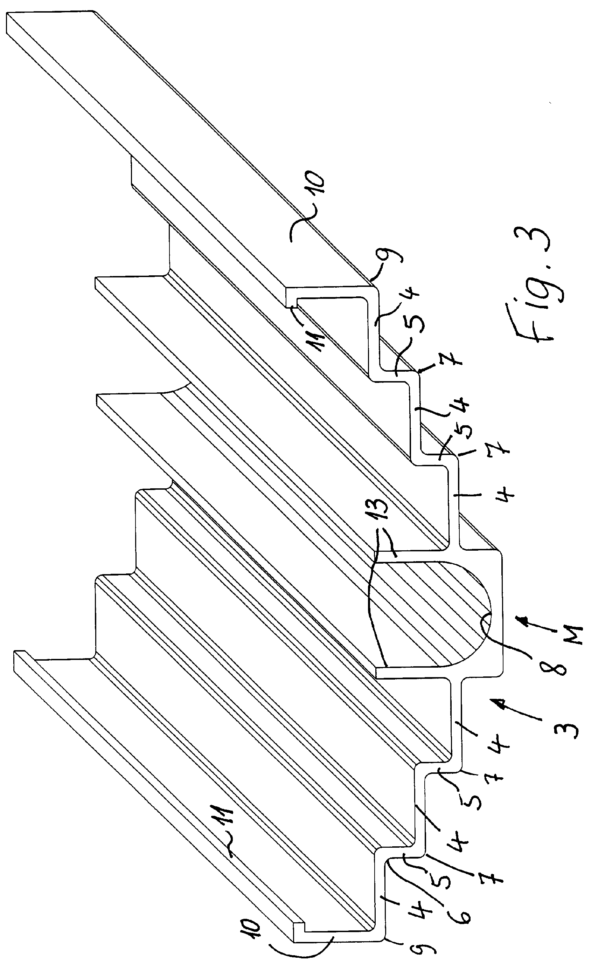

- Fig.3: ein der Fig.2 weitgehend entsprechendes Ausführungsbeispiel, bei welchem die abwärtsgerichteten Stege rechtwinklig zu den im Querschnitt horizontal verlaufenden Stegen angeordnet sind.

Ein im ganzen mit 1 bezeichnetes Strahlelement dient zum Abstrahlen von Wärme oder Kälte und weist einen ein Heiz- oder Kühlmedium führenden Kanal 2 auf, der im Ausführungsbeispiel als Rohr ausgebildet und mit einem Abstrahlkörper 3 wärmeleitend verbunden ist. Dieses Strahlelement 1 kann beispielsweise in der dargestellten horizontalen Anordnung an einer Gebäudedecke angebracht werden.

Das Strahlelement 1 beziehungsweise sein Abstrahlkörper 3 hat dabei, wie in der Zeichnung deutlich erkennbar, ein Querschnittsprofil mit mehreren im wesentlichen parallelen und gleichzeitig horizontalen Stegen 4 und mit diese verbindenden, im Winkel zueinander und zu diesen Stegen 4 angeordneten Stegen 5, wobei diese Anordnung der Stege 4 und 5 so gewählt ist, daß die Querschnittsform bei horizontal angeordnetem Strahlelement von außen zu seiner Mitte M von oben nach unten stufen- oder treppenförmig gestaltet ist, so daß sich in der Mitte M eine tiefste Stelle ergibt, an welcher im Ausführungsbeispiel der das Medium führende Kanal 2 in Form eines Rohres innenseitig angeordnet ist, wie man es deutlich in der einzigen Figur erkennt. Die abwechselnd mit ihrem Querschnitt nach unten und zur Mitte hin verlaufenden Stege 5 und 4 sind dabei über konkav gerundete Bereiche 6 und konvex gerundete Bereiche 7 verbunden, so daß der beidseits der Mitte M befindliche stufen- oder treppenförmige Querschnitt jeweils etwa wellenförmig ausgebildet ist, was ebenfalls in der Zeichnung deutliche erkennbar ist. Dies begünstigt die Abstrahlung von Wärme oder Kälte und vermeidet Schattenfugen und ein Abstrahlen von Wärme oder Kälte gegen den Abstrahlkörper 3 selbst. Außerdem wird dadurch eine relativ große Abstrahlfläche bei relativ geringer Breite geschaffen, das heißt das Strahlelement 1 und sein Abstrahlkörper 3 sind sehr effektiv.

Die zur Mitte hin verlaufenden Stege 4 sind dabei bei horizontal angeordnetem Strahlelement 1 etwa horizontal und die mit ihrem Querschnitt nach unten verlaufenden Stege 5 schräg angeordnet, wobei die gerundeten Bereiche 6 und 7 in diese Stege 4 und 5 jeweils übergehen. Somit hat auch ein horizontaler Steg 4 nicht genau horizontal verlaufende Bereiche, während bei einem schräg angeordnetem Steg 5 innerhalb dessen Querschnitt ebenfalls Richtungsänderungen vorhanden sind, wie man es deutlich in der Zeichnung erkennt.

Die tiefste Stelle in der Mitte M des Abstrahlkörpers 3 ist durch einen im Querschnitt bogenförmig oder rinnenförmig gestalteten, insbesondere im Querschnitt etwa teilkreis- oder halbkreisförmigen Steg 8 gebildet, von welchem außenseitig jeweils im wesentlichen horizontal angeordnete Stege 4 abgehen, und der gemäß Fig. 2 und 3 außenseitig auch kantig gestaltet sein kann. Somit wird an der tiefsten Stelle eine günstige Lagerungsmöglichkeit für das den Kanal 2 bildende Rohr geschaffen und gleichzeitig für eine Querschnittsform auch an der tiefsten Stelle gesorgt, die eine günstige und gleichmäßige Abstrahlung nach unten und schräg nach unten ergibt.

Das den Kanal 2 bildende Rohr kann dabei an der Innenseite dieses rinnenförmigen Steges 8 flächig anliegen und gegebenenfalls auch durch Kleben, Pressen, Löten und/oder Schweißen befestigt sein. Somit kann die Wärme oder Kälte des in dem Kanal 2 geführten Mediums gut auf den Steg oder die Rinne 8 und die damit verbundenen weiteren Stege 4 und 5 übertragen werden, wobei die Anordnung an der tiefsten Stelle den Wärmeübergang auch durch Konvektion zu den demgegenüber höherliegenden Stegen 4 und 5 begünstigt.

Die randseitig jeweils letzte Richtungsänderung 9 des Querschnittes des Abstrahlkörpers 3 geht gemäß dem Ausführungsbeispiel in einen bei horizontaler Anordnung im Querschnitt etwa vertikalen Befestigungsrand 10 über, der zum Befestigen des Strahlelementes 1 an einem mit ihm benachbarten weiteren Strahlelement und/oder an einer Deckenplatte, Gebäudedecke oder dergleichen dienen kann. Dieser Befestigungsrand 10 kann also gleichzeitig auch als Abstandhalter gegenüber einer Gebäudedecke oder in abgewandelter Anwendung einer Gebäudewand dienen und die durch dieses Strahlelement 1 gebildete Strahlquelle so weit von der Gebäudedecke oder -wand fixieren, daß die Gefahr eines Wärme- oder Kälteverlustes an die Gebäudedecke oder Wand weitgehend vermieden wird.

Außerdem erkennt man im Ausführungsbeispiel, daß die Befestigungsränder 10 nach innen gerichtete Halterungen, Vorsprünge oder Leisten, nämlich jeweils einen am obersten Rand des Befestigungsrandes 10 nach innen beziehungsweise zur Mitte des Strahlelementes 1 gerichteten Befestigungssteg 11 zum Fixieren und Übergreifen einer im Inneren des Querschnittes des Strahlelementes 1 oberhalb des das Medium führenden Kanals 2 angeordneten Isolierung 12 aufweisen. Dabei erkennt man, daß diese Isolierung 12 den das Medium führenden Kanal 2 überdeckt und nach oben abschirmt, was vor allem dann vorteilhaft ist, wenn der Kanal 2 ein Heizmedium führt.

Das Strahlelement 1 beziehungsweise der Abstrahlkörper 3 hat im Ausführungsbeispiel an seiner Innenseite benachbart zu der Auflagestelle für das den Kanal 2 bildende Rohr beidseits dieses Rohres jeweils einen hochstehenden Steg 13, der nach dem Einlegen des Rohres gegebenenfalls dieses an seinem Umfang umgreifend verbogen werden könnte, im Ausführungsbeispiel aber zur Unterstützung der Isolierung 12 dient. Die Querschnittslänge dieser Stege 13 ist also so gewählt, daß sie bis an die Unterseite der Isolierung 12 reichen.

Ferner erkennt man an der Innenseite des Strahlelementes 1 beziehungsweise des Abstrahlkörpers 3 in Verlängerung der oberen horizontalen Stege 4 jeweils einen zur Mitte hin gerichteten Fortsetzungssteg 14, der derart vorspringt, daß die Auflagefläche für die Isolierung 12, die auch auf den oberen horizontalen Stegen 4 aufliegt, vergrößert ist. Somit kann eine flache Isolierung 12 gleichbleibender Dicke vorgesehen werden, die entsprechend preiswert herzustellen und einfach zu montieren ist. Denn der oder die Fortsetzungsstege 14 springen dabei an den obersten horizontalen Stegen 4 innenseitig vor, das heißt sie befinden sich in Gebrauchsstellung oberhalb des das Medium führenden Kanales 2 oder Rohres.

Zwar könnte man auch beispielsweise unter Vermeidung von Fortsetzungsstegen 14 eine Isolierung 12 vorsehen, die den Innenquerschnitt praktisch treppenförmig ausfüllt, jedoch würde dies die Anfertigung einer entsprechend profilierten Isolierung erfordern. Dies ist aber nicht erforderlich, weil auch der zwischen der Isolierung 12 und den Stegen 4 und 5 verbleibende Hohlraum zur Isolierung beiträgt.

Die beschriebenen Stegformen und Steganordnungen sind besonders einfach zu realisieren, wenn das Strahlelement 1 beziehungsweise der Abstrahlkörper 3 aus Aluminium oder einer Aluminiumlegierung besteht und als Strangpreßprofil hergestellt ist. Dies ergibt nicht nur eine gute Wärmeleitung, sondern auch eine einfache Herstellung, wobei Krümmungsradien und Richtungsänderungen des Querschnittes sehr einfach realisiert werden können, und erlaubt ein relativ geringes Gewicht.

Nahe den randseitigen letzten Richtungsänderungen 9, also nahe den Längsrändern des Strahlelementes 1 und somit nahe dem Übergang in einen im Querschnitt etwa vertikalen Befestigungsrand 10 erkennt man an den horizontalen Stegen 4 jeweils einen über die Länge des Strahlelementes 1 verlaufenden außenseitigen flachen Vorsprung 15, der also gegenüber der unteren Oberfläche des Steges 4 etwas nach unten übersteht. Dieser hat im Ausführungsbeispiel dabei eine konvex gekrümmte Querschnittsform und trägt dazu bei, daß an der Außenfläche des Strahlelementes 1 auftretende Konvektion gemindert bzw. gebremst wird.

Im Ausführungsbeispiel ist der ein Heiz- oder Kühlmedium führende Kanal 2 als in ein Strangpreßprofil eingefügtes Rohr ausgebildet. Es ist aber auch möglich, daß der Kanal 2 einstückig in den Abstrahlkörper 3 des Strahlelementes 1 integriert und ein eingelegtes Rohr eingespart ist. Ferner sei erwähnt, daß der Abstrahlkörper 3, welcher im Ausführungsbeispiel ein Strangpreßprofil ist, auch aus Blech geformt, zum Beispiel rollgeformt und/oder gekantet sein könnte, wodurch ebenfalls die außenseitige gestufte Querschnittsform gebildet werden kann.

Fig.2 zeigt einen gegenüber Fig.1 etwas abgewandelten Abstrahlkörper 3 ohne den das Heiz- oder Kühlmedium führenden Kanal 2 und ohne die Isolierung 12, die in analoger Weise zu Fig.1 angebracht werden können. Auch dabei sind die mit ihrem Querschnitt nach unten verlaufenden Stege 5 schräg angeordnet, so daß sich an der Unterseite dieses Abstrahlkörpers 3 zwischen den horizontalen und den abwärtsgerichteten Stegen stumpfe Winkel von mehr als 90° bilden. Die Übergänge zwischen diesen Stegen sind kantig beziehungsweise mit kleinem Krümmungsradius ausgebildet, so daß auch dieses Ausführungsbeispiel ein Strangpreßprofil sein kann.

Fig.3 zeigt eine der Fig.2 entsprechende Ausgestaltung eines Abstrahlkörpers 3, bei welchem die im Querschnitt nach unten verlaufenden Stege 5 rechtwinklig zu den im Querschnitt horizontalen Stegen 4 angeordnet sind, wobei wiederum zwischen diesen Stegen 4 und 5 kantige Übergänge oder solche mit kleinem Krümmungsradius vorgesehen sind.

Bei den Ausführungsbeispielen nach Figur 2 und 3 sind im Bereich der tiefsten Stelle des stufen- oder treppenförmigen Querschnitts wie beim Ausführungsbeispiel nach Fig.1 die hochstehenden Stege 13 erkennbar mit denen ein den Kanal 2 bildendes Rohr in gleicher Weise wie im Ausführungsbeispiel nach Fig.1 fixiert werden kann. Ebenso kann damit auch eine Isolierung 12 zusätzlich abgestützt werden. Dabei hat die Rinne 8 nur innenseitig einen bogenförmigen Querschnitt. Außerdem sind jeweils ein Steg 4 und ein Steg 5 mehr als im Ausführungsbeispiel nach Fig. 1 vorgesehen.

Somit entsprechen die Ausführungsbeispiele nach Figur 2 und 3 bis auf kleinere Unterschiede in der Querschnittsform dem Ausführungsbeispiel nach Figur 1.

Das Strahlelement 1 zum Abstrahlen von Wärme oder Kälte hat einen ein Heiz- oder Kühlmedium führenden Kanal 2, der einstückig oder als Rohr mit einem Abstrahlkörper 3 wärmeleitend verbunden ist. Die Querschnittsform des Strahlelementes 1 ist dabei durch unterschiedliche, miteinander verbundene Stege etwa stufen- oder treppenförmig ausgebildet, so daß sich in der Längsmitte des Strahlelementes 1 eine tiefste Stelle ergibt. Zumindest an dieser tiefsten Stelle, gegebenenfalls aber auch an einer dieser benachbarten etwas weniger tiefen Stelle kann wenigstens ein das Medium führender Kanal 2 vorgesehen sein, wobei aber gegebenenfalls auch mehrere Kanäle 2 möglich sind. Durch die vorzugsweise wellenförmig gestaltete treppenförmige Querschnittsform ergibt sich auf relativ engem Raum eine große und effektive Abstrahlfläche mit wenig oder keiner diese Abstrahlung störenden Konvektion.

## Patentansprüche

1. Strahlelement (1) zum Abstrahlen von Wärme und/oder Kälte mit wenigstens einem ein Heiz- oder Kühlmedium führenden Kanal (2), welcher mit einem Abstrahlkörper wärmeleitend verbunden ist, der insbesondere an einer Gebäudedecke anbringbar ist, **dadurch gekennzeichnet, daß** das Strahlelement (1) beziehungsweise der Abstrahlkörper (3) ein Querschnittsprofil einerseits mit mehreren im wesentlichen parallelen Stegen (4) und andererseits mit diese verbindenden, im Winkel zueinander angeordneten Stegen (5) aufweist, die im Querschnitt gesehen - bei horizontal angeordnetem Strahlelement (1)-von außen zur Mitte (M) von oben nach unten stufen- oder treppenförmig angeordnet sind, so daß sich in der Mitte (M) eine tiefste Stelle ergibt, und daß zumindest an dieser tiefsten Stelle und/oder an einer dieser benachbarten Stelle der wenigstens eine das Medium führende Kanal (2) vorgesehen ist.

2. Strahlelement nach Anspruch 1, **dadurch gekennzeichnet, daß** die abwechselnd mit ihrem Querschnitt nach unten und zur Mitte (M) hin verlaufenden Stege (5,4) über gerundete Bereiche (6,7) verbunden sind.

3. Strahlelement nach Anspruch 1 oder 2, **dadurch gekennzeichnet, daß** die stufen- oder treppenförmige Querschnittsform des Abstrahlkörpers (3) etwa wellenförmig ausgebildet ist.

4. Strahlelement nach einem der Ansprüche 1 bis 3, **dadurch gekennzeichnet, daß** die zur Mitte (M) hin verlaufenden Stege (4) bei horizontal angeordnetem Strahlelement (1) etwa horizontal und die mit ihrem Querschnitt nach unten verlaufenden Stege (5) schräg oder rechtwinklig angeordnet sind.

5. Strahlelement nach einem der Ansprüche 1 bis 4, **dadurch gekennzeichnet, daß** die tiefste Stelle durch einen im Querschnitt bogenförmig verlaufenden, insbesondere im Querschnitt etwa teilkreis- oder halbkreisförmig geformten Steg (8) gebildet ist, von welchem jeweils zwei im wesentlichen horizontal angeordnete Stege (4) abgehen.

6. Strahlelement nach einem der Ansprüche 1 bis 5, **dadurch gekennzeichnet, daß** der bogenförmig oder halbkreisförmig geformte, an der tiefsten Stelle liegende, insbesondere rinnenförmige, Steg (8) Teil des Umfanges des das Medium führenden Kanales ist oder ein als das Medium führender Kanal (2) ausgebildetes Rohr aufnimmt, das mit seiner Außenseite an der Innenseite dieses Steges (8) insbesondere flächig anliegt.

7. Strahlelement nach einem der Ansprüche 1 bis 6, **dadurch gekennzeichnet, daß** die randseitig jeweils letzte Richtungsänderung (9) in einen bei horizontaler Anordnung des Strahlelementes (1) im Querschnitt etwa vertikalen Befestigungsrand (10) übergeht, der zum Befestigen des Strahlelementes (1) an einem mit ihm benachbarten weiteren Strahlelement und/oder an einer Deckenplatte, Gebäudedecke oder dergleichen dient.

8. Strahlelement nach einem der Ansprüche 1 bis 7, **dadurch gekennzeichnet, daß** seine Befestigungsränder (10) nach innen gerichtete Halterungen, Vorsprünge oder Leisten zum Fixieren einer im Inneren des Querschnittes des Strahlelementes (1) oberhalb des oder der das Medium führenden Kanäle (2) angeordneten Isolierung (12) aufweisen, und daß eine dort angeordnete Isolierung (12) den oder die Medium führenden Kanäle nach oben überdeckt.

9. Strahlelement nach einem der Ansprüche 1 bis 8, **dadurch gekennzeichnet, daß** ein am obersten Rand des Befestigungsrandes (10) nach innen bzw. zur Mitte des Strahlelementes
(1) gerichteter Befestigungssteg (11) zum Übergreifen der Isolierung (12) und/oder zum Verankern von Klammern oder dergleichen Befestigungselemente zum lösbaren Befestigen des Strahlelementes (1) und/oder der Isolierung vorgesehen sind.

10. Strahlelement nach einem der Ansprüche 1 bis 9, **dadurch gekennzeichnet, daß** ein als Medium führender Kanal (2) ausgebildetes Rohr an der Innenseite einer der Wellen oder dergleichen Profilierungen, insbesondere an der tiefsten Welle oder Stelle, durch Kleben, Pressen, Löten und/oder Schweißen befestigt ist.

11. Strahlelement nach einem der Ansprüche 1 bis 10, **dadurch gekennzeichnet, daß** an seiner Innenseite benachbart zu der Auflagestelle für das Rohr oder dergleichen wenigstens ein Steg (13), vorzugsweise beidseits dieser Stelle jeweils ein Steg (13) vorstehend angeordnet ist, der nach dem Einlegen des Rohres gegebenenfalls dieses an seinem Umfang zumindest bereichsweise umgreifend verbiegbar ist, so daß zwei beidseits des Rohres angeordnete Stege (13) aufeinander zu verformbar sind und das Rohr wärmeleitend und formschlüssig festlegen.

12. Strahlelement nach einem der Ansprüche 1 bis 11, **dadurch gekennzeichnet, daß** es aus Aluminium oder einer Aluminiumlegierung besteht und daß das das Medium führende Rohr aus Kunststoff oder aus einem mit Aluminium verträglichen Metall, insbesondere ebenfalls aus Aluminium oder einer Aluminiumlegierung oder Edelstahl besteht.

13. Strahlelement nach einem der Ansprüche 1 bis 12, **dadurch gekennzeichnet, daß** nahe dem oder den Längsrändern des Abstrahlkörpers (3), insbesondere nahe der außenseitig letzten Richtungsänderung (9) des Querschnittes und nahe dem Übergang in einen im Querschnitt etwa vertikalen Befestigungsrand (10) ein über die Länge des Strahlelementes verlaufender außenseitiger, insbesondere gegenüber einem horizontalen Steg (4) überstehender Vorsprung (15), vorzugsweise mit einer konvex gekrümmten Querschnittsform, angeordnet ist.

14. Strahlelement nach einem der Ansprüche 1 bis 13, **dadurch gekennzeichnet, daß** an seiner Innenseite in Verlängerung wenigstens eines der etwa horizontal verlaufenden Stege (4) jeweils ein zur Mitte hin gerichteter Fortsetzungssteg (14) vorspringt, der die Auflagefläche für die Isolierung (12) vergrößert.

15. Strahlelement nach Anspruch 14, **dadurch gekennzeichnet, daß** der oder die Fortsetzungsstege (14) an einem horizontalen Steg (4) des Strahlelementes (1) innenseitig vorspringt, der in Gebrauchsstellung oberhalb des das Medium führenden Kanales (2) oder Rohres verläuft und daß insbesondere eine Isolierung (12) gleichbleibender Dicke vorgesehen ist.

16. Strahlelement nach einem der Ansprüche 1 bis 15, **dadurch gekennzeichnet, daß** es ein Strangpreßprofil ist.

17. Strahlelement nach einem der Ansprüche 1 bis 16, **dadurch gekennzeichnet, daß** der Kanal (2) einstückig in den Abstrahlkörper (3) des Strahlelementes (1) integriert ist.

18. Strahlelement nach einem der vorstehenden Ansprüche, **dadurch gekennzeichnet, daß** der Abstrahlkörper (3) aus Blech geformt, zum Beispiel rollgeformt und/oder gekantet ist.

19. Strahlelement nach einem der vorstehenden Ansprüche, **dadurch gekennzeichnet, daß** die Übergänge (6,7) zwischen den Stegen (4,5) einen kleinen Krümmungsradius haben und/oder kantig ausgebildet sind. Zusammenfassung
